# EUROPÄISCHE PATENTSCHRIFT

(11) **EP 2 643 706 B1**
(45) Veröffentlichungstag und Bekanntmachung des Hinweises auf die Patenterteilung: **18.12.2024**
(21) Anmeldenummer: 11787900.7
(22) Anmeldetag: 25.11.2011
(51) Int. Cl.: G01S 5/02

(54) **FLUGFÜHRUNGSSYSTEM**
FLIGHT GUIDANCE SYSTEM
SYSTÈME DE GUIDAGE D'AÉRONEF

(30) Priorität: 26.11.2010 DE 102010052474
(43) Veröffentlichungstag der Anmeldung: 02.10.2013
(60) Teilanmeldung: 22174888.2
(73) Patentinhaber: Meißner, Ute Maria, 50996 Köln (DE)
(72) Erfinder: MEISSNER, Ute Marita, 50996 Köln (DE); HAHN, Klaus-Uwe, 38176 Wendeburg (DE)
(74) Vertreter: dompatent von Kreisler Selting Werner - Partnerschaft von Patent- und Rechtsanwälten mbB
(86) Internationale Anmeldenummer: PCT/EP2011/071027
(87) Internationale Veröffentlichungsnummer: WO 2012/069629

(56) Entgegenhaltungen:
- EP-A2- 0 385 600
- WO-A1-95/08779
- WO-A2-98/02762
- DE-T2- 60 106 446
- FR-A1- 2 759 163
- FR-A1- 2 836 554
- US-A- 3 047 861
- US-A- 3 146 448
- US-A- 3 795 911
- US-A- 3 952 308
- US-A- 4 990 922
- US-A- 5 017 930
- US-A1- 2003 122 666
- US-A1- 2004 220 722
- US-A1- 2007 040 734
- US-A1- 2008 269 988
- VAN GRAAS FRANK ET AL: "GPS INTERFEROMETRIC ATTITUDE AND HEADING DETERMINATION: INITIAL FLIGHT TEST RESULTS", NAVIGATION: JOURNAL OF THE INSTITUTE OF NAVIGATION, INSTITUTE OF NAVIGATION, FAIRFAX, VA, US, vol. 38, no. 4, 1 March 1992 (1992-03-01), pages 297 - 316, XP056013104, ISSN: 0028-1522

## Beschreibung

Die Erfindung betrifft ein Flugführungssystem zur Flugunterstützung eines Flugobjektes. Die Erfindung betrifft ebenfalls ein Verfahren hierzu.

Eine der kritischsten Phasen während eines Fluges sind die Landung und der Start. Von entscheidender Bedeutung ist bei der Landung, dass die Position des Flugzeuges und die Sinkrate derart aufeinander abgestimmt sind, dass das Flugzeug an einer vordefinierten Position auf der Landebahn, Sollaufsetzpunkt genannt, aufsetzt, so dass der Pilot genügend Spielraum hat, um das Flugzeug ausrollen zu lassen und auf die Taxigeschwindigkeit herunter zu bremsen. Abweichungen von mehreren Metern nach links oder nach rechts sowie zu früher Bodenkontakt führen dazu, dass das Flugzeug die Landebahn verfehlt und verunglückt. Setzt das Flugzeug dagegen zu spät auf, so besteht die Gefahr, dass das Flugzeug nicht mehr auf die Taxigeschwindigkeit herunter gebremst werden kann und über die Landebahn hinausrollt und ebenfalls verunglückt.

Während der Pilot das Flugzeug bei guten Wetter- und Sichtbedingungen im Sichtflug sicher landen kann, sind insbesondere bei schlechten Wetterverhältnissen, wie beispielsweise Nebel oder Dunkelheit, zusätzliche Systeme erforderlich, die den Piloten bei der Landung unterstützen. Solche Systeme dienen dazu, dem Piloten einen Weg zum Aufsetzpunkt auf der Landebahnschwelle aufzuzeigen, den er aufgrund der äußeren Witterungsverhältnisse selber nicht abschätzen kann.

Seit den Zwanziger Jahren des letzten Jahrhunderts ist beispielsweise das ILS (instrument landing system) bekannt, welches ein bodenbasiertes Landesystem ist und den Piloten insbesondere bei schlechten Witterungsverhältnissen bei der Landung unterstützt. Dabei wird mit Hilfe zweier elektromagnetischer Leitstrahlen der Kurs angezeigt, dem das Flugzeug folgen muss, um sicher auf der Landebahn aufzusetzen. An Bord des Flugzeuges befindet sich ein entsprechender Empfänger, der das elektromagnetische Signal empfängt und den entsprechenden Kurs für den Piloten sichtbar auf einem Display anzeigt. Ein weiteres Landesystem, das in den achtziger Jahren des letzten Jahrhunderts entwickelt wurde, stellt das MLS (microwave landing system) dar. Das System sendet einen zeitlichen horizontal und vertikal abgelenkten Strahl in den Einflugbereich des Flugzeuges.

Neben den beiden oben genannten Landesystemen werden heutzutage bei guten Sichtverhältnissen zusätzlich auch Satellitennavigationssysteme eingesetzt, um die Ortsposition des Flugzeuges im Raum bestimmen zu können und dies bei der Landung mit einfließen zu lassen. Satellitennavigationssysteme wie GPS (Global Position System), GALILEO, oder GLONASS sind in der Regel aber nur auf einige wenige Meter (ein bis drei Meter) genau. Zwar lässt sich dieser Fehleranteil mit Hilfe von DGPS (Differential GPS) ansatzweise korrigieren, indem ein entsprechendes Korrektursignal basierend auf dem von einer nahegelegenen DGPS-Bodenstation gemessenen Signal ausgesendet wird. Allerdings wird auch so nicht die Genauigkeit erreicht, die notwendig ist, damit ein Flugzeug präzise auf der Landebahnschwelle aufsetzen kann. Denn hierfür ist eine Genauigkeit von wenigen Zentimetern notwendig, da andernfalls die Höhe über dem Grund des Luftfahrzeuges nicht hinreichend genau bestimmbar ist. Ein weiterer Nachteil ist die zu geringe Taktrate, mit der die Signale erneuert werden und die dadurch keine kontinuierliche Information zur Verfügung stellen können.

Darüber hinaus ergibt sich bei der Verwendung von Satellitennavigationssystemen der Nachteil, dass die rechtliche Zuordnung des Betreibers problematisch ist. Im Falle eines Ausfalls bzw. eines Fehlers bleibt daher rechtlich die Frage, wer für den entstandenen Schaden haftet. Außerdem sind Satellitennavigationssysteme heutzutage bei schlechter Sicht (Kategorie ICAO-CATIII) zur Landeunterstützung nicht zugelassen.

So ist bspw. aus der US-B-6,469,654 ein Transponder-Landesystem bekannt, bei dem von einer am Boden angeordneten Sendeeinheit ein Signal zum Flugzeug gesendet wird. Dieses Signal wird dann von einem für das Sekundärradar notwendigen Transponder erkannt und zurückgesendet, wobei das zurückgesendete Signal von mehreren am Boden angeordneten Empfängern empfangen wird. Anhand der Signallaufzeit wird dann die Entfernung bestimmt, wobei so auf die Position des Flugzeuges geschlossen werden kann. Ein ähnliches System offenbart auch die US-A-5,017,930.

Der erhebliche Nachteil beider Systeme besteht jedoch darin, dass die Verarbeitungsgeschwindigkeit des Transponders nicht bekannt ist, so dass dies bei der Ermittlung der Signallaufzeit als Unbekannte verbleibt, was letztlich zu einer erhöhten Ungenauigkeit bei der Ermittlung der Entfernung führt.

Aus der US-A-3,047,861 ist ein Luftverkehrskontroll- und Überwachungssystem bekannt, bei dem vier Bodenstationen zum Empfangen von ausgesendeten Funksignalen eingerichtet sind. Mittels einer Decodiereinrichtung können die in den Funksignalen enthaltenen Informationen wie Flugzeug-ID oder Höhe extrahiert werden, wobei mittels einer Korrelationseinheit festgestellt werden kann, ob sich das Flugzeug innerhalb des zu überwachenden Luftraums befindet. Insoweit handelt es sich hierbei um die Grundfunktionalität eines Transpondersystems.

Aus der FR-A-2 836 554 ist eine Hubschrauberlandehilfe zum Landen auf beweglichen Objekten, wie beispielsweise einem sich bewegenden Schiff, bekannt. An dem Schiff sind eine Reihe von Funksende- und Empfangsstationen angeordnet, die eine Funkverbindung mit dem Flugobjekt aufbauen, wodurch eine relative Entfernung ermittelt werden kann.

Die Bestimmung der Raumlage eines Flugobjekts mit Hilfe von GNSS-Empfängern ist beispielsweise aus WO-A-95/08779, US-A-4 990 922 und VAN GRAAS FRANK et al.: "GPS INTERFEROMETTRIC ATTITUDE AND HEADING DETERMINATION: INITIAL FLIGHT TEST RESULTS", NAVIGATION: JOURNAL OF THE INSTITUTE OF NAVIGATION, Bd. 38, Nr. 4, 1. März 1992, Seiten 297-316, XP056013104 bekannt.

Die US-A-2004/0220722 offenbart eine Positionsermittlung von Objekten, indem durch an den Objekten angeordneten Empfänger Radiosignale empfangen werden. Anhand des Empfangswinkels der einzelnen Funksignale sowie der Kenntnis der Position der Sendestation kann dann die Position zumindest in der zweidimensionalen Ebene ermittelt werden.

Aus der US-A-3,795,911 wird eine Positionsermittlung mittels Reflektion offenbart. Dabei wird ein erfassendes Objekt gescannt, wobei anhand der Objektreflektion die Position bestimmbar wird.

Die US-A-2003/0122666 offenbart ein Verfahren zum Erfassen der Position eines Objektes, das entsprechende Funksignale aussendet, die von einer Bodenstation empfangen werden. Dabei werden die einzelnen Funksignale hinsichtlich ihrer Phasenverschiebung untersucht, wodurch die Position des Objektes ermittelt werden soll.

Die US-A-3,952,308 offenbart eine perspektivische Darstellung des Landeanfluges auf einen Flugplatz. Dabei sind sowohl vorne an der Landebahn als auch hinten sogenannte Marker angeordnet, die ein Funksignal mit unterschiedlichen Frequenzen aussendet. An dem Flugobjekt sind Antennen angeordnet, die diese Frequenzen empfangen und so bei konstanter Fortbewegung des Flugzeuges über Dopplereffekt und Phasenverschiebung die Position des Flugobjektes relativ zu dem Marker ermitteln.

Aus der US-A-2007/040734 ist ein Transpondersystem zur Flugführung bekannt, bei dem durch am Boden angeordnete Transponder ein Signal ausgesendet, die von einem an dem Flugzeug angeordneten Transponder empfangen und wieder zurück gesendet wird, wobei das zurückgesendete Signal von einer entsprechend am Boden angeordneten Empfangseinheit empfangen und anhand der Laufzeit dann die Position des Flugzeugs bestimmt werden kann. Dabei werden die Empfangsantennen hinsichtlich ihrer Funktionsweise verifiziert, indem ein Referenzsender angeordnet wird, der ein entsprechendes Signal für die jeweils zugeordneten Empfangseinheiten aussendet.

Die DE-T-601 06 446 offenbart schließlich ein reines Transponderlandesystem, bei dem von einer Bodenstation aus ein Transpondersignal an das Flugzeug gesendet, dort empfangen, verarbeitet und dann zur Bodenstation wieder zurück gesendet wird.

### Aufgabe

Es ist daher Aufgabe der vorliegenden Erfindung, ein verbessertes Flugführungssystem anzugeben, das die Flugführung unter Zugrundelegung einer hochgenauen Ortsposition des Luftfahrzeuges auch bei schlechten Sichtverhältnissen unterstützt.

### Lösung

Die Aufgabe wird mit dem eingangs genannten Flugführungssystem zur Flugunterstützung eines Flugobjektes gelöst mit einer Mehrzahl von ortsfesten Bodenstationen, die jeweils eine Sendeeinheit aufweisen, und mit mindestens einer an dem Flugobjekt angeordneten objektfesten Empfangseinheit, wobei die Sendeeinheit zum Senden von Positionssignalen und die Empfangseinheit zum Empfangen dieser Positionssignale eingerichtet sind und das Flugführungssystem wenigstens eine mit zumindest einem Teil der Sende- und/oder Empfangseinheiten in Verbindung stehende Positionsermittlungseinheit aufweist, die zum Ermitteln von Ortspositionen der objektfesten Empfangseinheit in Abhängigkeit von den Positionssignalen, die von den ortsfesten Sendeeinheiten gesendet und von der mindestens einen objektfesten Empfangseinheit empfangen wurde, eingerichtet ist, wobei die Positionsermittlungseinheit zum Ermitteln der Ortsposition der objektfesten Empfangseinheit in Abhängigkeit von einer Signallaufzeit der Positionssignale zwischen Sendeeinheiten und Empfangseinheiten eingerichtet ist, wobei das Flugführungssystem zur Flugunterstützung des Flugobjektes in Abhängigkeit von den ermittelten Ortspositionen ausgebildet ist und wobei das Flugführungssystem drei an dem Flugobjekt angeordnete objektfeste Empfangseinheiten aufweist, die voneinander beabstandet angeordnet sind, wobei die Positionsermittlungseinheit zum Ermitteln der hochgenauen Ortspositionen der objektfesten Empfangseinheiten aus der Kombination von Entfernungs-, Winkel- und Dopplermessung in Abhängigkeit von den Positionssignalen ausgebildet und damit zum Ermitteln der Raumlage des Flugobjektes in Abhängigkeit von den Ortspositionen der jeweiligen Sende- und/oder Empfangseinheiten und der relativen Lage der Sende- und/oder Empfangseinheiten untereinander eingerichtet ist und das Flugführungssystem zur Flugunterstützung des Flugobjektes in Abhängigkeit der Raumlage des Flugobjektes ausgebildet ist.

Um die aus dem Stand der Technik bekannten Nachteile zu vermeiden, schlägt die vorliegende Erfindung ein Flugführungssystem vor, das eine Mehrzahl von ortsfesten Bodenstationen aufweist. Die ortsfesten Bodenstationen sind dabei in der näheren Umgebung der Landebahn bzw. des Flughafens voneinander beabstandet angeordnet und weisen entsprechende Sendeeinheiten auf, mit deren Hilfe Positionssignale gesendet werden können. Ein Flugobjekt, das auf diesem Flughafen landen bzw. von diesem starten möchte und dabei dieses Flugführungssystem zur Unterstützung nutzen will, weist mehrere Empfangseinheiten auf, die an dem Flugobjekt objektfest angeordnet sind. Die ortsfesten Sendeeinheiten sind dabei zum Aussenden von Positionssignalen eingerichtet, während die objektfesten Empfangseinheiten zum Empfangen dieser ausgesendeten Positionssignale eingerichtet und ausgebildet sind.

Darüber hinaus weist das Flugführungssystem eine Positionsermittlungseinheit auf, die in Abhängigkeit von den empfangenen Positionssignalen die hochgenaue Ortsposition der objektfesten Empfangseinheiten ermittelt und somit bspw. die Landung des Flugobjektes anhand der daraus ermittelbaren hochgenauen Ortsposition des Flugobjekts unterstützen kann.

Die Ermittlung der Ortsposition der objektfesten Empfangseinheit erfolgt in Abhängigkeit von der Signallaufzeit der Positionssignale, die von den Sendeeinheiten ausgesendet wurden. Unter Zuhilfenahme der Ortsposition der ortsfesten Bodenstationen, die im Vorfeld hochgenau ermittelt werden können und die der Positionsermittlungseinheit bekannt sind, kann die Ortsposition des Flugobjektes hochgenau ermittelt werden. Bereits bei der Verwendung von vier ortsfesten Bodenstationen und dem Aussenden von jeweils vier Positionssignalen an unterschiedlichen Positionen bzw. dem Empfangen eines Positionssignals an vier unterschiedlichen Positionen lässt sich aus der Signallaufzeit der einzelnen Positionssignale dann die Ortspositionen der Empfangseinheiten, ähnlich wie beim GPS, hochgenau bestimmen.

Besonders vorteilhaft ist die Verwendung dieses Systems zur Durchführung eines präzisen Landanflugs.

Nach der Erfindung ist die Positionsermittlungseinheit auf dem Flugobjekt angeordnet und mit den objektfesten Empfangseinheiten derart verbunden, dass die von den objektfesten Empfangseinheiten empfangenen Positionssignale bzw. die daraus ableitbaren Informationen an die Positionsermittlungseinheit weitergeleitet werden können. Die Bodenstationen weisen dabei entsprechende Sendeeinheiten auf, die diese Positionssignale aussenden, damit das Flugobjekt seine Position selbstständig und autark bestimmen kann.

Nach der Erfindung erfolgt die Flugunterstützung des Flugobjektes mit Hilfe des Flugführungssystems anhand der ermittelten hochgenauen Ortsposition des Flugobjekts, so dass beispielsweise das Flugobjekt auch bei schlechten Sichtverhältnissen manuell oder mit Hilfe des Autopiloten sicher auf der Landebahn landen kann. Denn mit Hilfe dieses Systems ist es möglich, die Position des Flugzeuges derart genau zu bestimmen, dass auch die Höhe des Flugzeuges hochgenau ermittelt werden kann. Nur mit einer entsprechend genauen Angabe über die Höhe über Grund ist ein sicheres Führen des Flugzeuges auf einer Sollflugbahn und ein gefahrloses Aufsetzen auf dem Sollaufsetzpunkt der Landebahnmöglich.

An dem Flugobjekt sind drei Empfangseinheiten beabstandet voneinander angeordnet, so dass für jede der objektfesten Empfangseinheiten die Ortsposition ermittelt wird, wobei sich aus den einzelnen Ortspositionen dann die Raumlage des Flugobjektes ableiten lässt. Werden beispielsweise die Empfangseinheiten jeweils an den Flügelspitzen sowie am vorderen oder hinteren Teil des Flugobjektes angeordnet und ist die relative Lage dieser Empfangseinheiten untereinander bekannt, so lässt sich die Raumlage des Flugzeuges aus den Ortspositionen der einzelnen Empfangseinheiten berechnen, wobei die Raumlage des Flugzeugs dann zur Landeunterstützung des Flugobjektes auf dem Flughafen herangezogen werden kann.

Die Positionssignale werden dabei von einer ortsfesten Sendeeinheit zu einer objektfesten Empfangseinheit gesendet, wobei bspw. zur Messung der Signallaufzeit eine entsprechende Synchronisation der Uhren sowohl bei den Sendeals auch bei den Empfangseinheiten notwendig ist. Dies kann bspw. durch einen einfachen Referenz-Zeitgeber erfolgen, da die Signallaufzeiten zu den Sendern und von den Empfängern über ihre zugehörigen Kabellängen bekannt sind bzw. über identische Kabellängen oder auf elektronischem Wege harmonisiert werden können.

Es ist aber auch denkbar, dass die Empfangseinheiten zum Ermitteln des Empfangswinkels der jeweiligen Positionssignale eingerichtet sind und die Positionsermittlungseinheit zum Ermitteln der Ortsposition der objektfesten Empfangseinheit in Abhängigkeit von diesen Empfangswinkeln eingerichtet ist. So lässt sich beispielsweise mit Hilfe der Multiangulation die Position der Empfangseinheit aus den unterschiedlichen Empfangswinkeln mehrerer Positionssignale als Schnittpunkt ermitteln. Darüber hinaus kann mit Hilfe dieses Systems aber auch die Genauigkeit der Positionsermittlung mit Hilfe der Signallaufzeit verbessert bzw. als Backup verwendet werden.

Zusätzlich ist es denkbar, dass die Empfangseinheiten bzw. die Positionsermittlungseinheit zur Ermittlung einer Dopplerverschiebung aus den Positionssignalen eingerichtet ist, so dass sich eine Relativgeschwindigkeit zwischen Flugobjekt und Bodenstation ermitteln lässt. Werden bspw. mindestens drei Positionssignale an drei unterschiedlichen Empfangseinheiten ermittelt, so kann aus der Dopplerverschiebung jedes Positionssignal ein dreidimensionaler Geschwindigkeitsvektor des Flugobjektes ermittelt werden. Da die Doppler-Messung sehr schnell erfolgen kann, werden Richtungsänderungen sehr schnell erfasst. Weiterhin liefert die empfangene Frequenzänderung beim Überflug von Sendeeinheiten eine sehr genaue Markerinformation. Wie aber bereits erwähnt, lässt sich aus der Kombination der drei Messmethoden (Entfernung, Winkel, Doppler) erfindungsgemäß eine hochgenaue Position des Flugobjektes ermitteln.

Vorteilhafterweise sind die ortsfesten Sendeeinheiten, die an den Bodenstationen angeordnet sind, mit einer Steuereinheit verbunden, die zum synchronen Aussenden der Positionssignale mittels der Sendeeinheiten eingerichtet ist. Dabei können die Signallaufzeiten von der Steuereinheit, die vorteilhafterweise im Tower angeordnet ist, hin zu den beabstandeten Bodenstationen kompensiert werden, da diese im Vorfeld bekannt sind. Somit lässt sich die Synchronisation des Aussendens dieser Positionssignale erheblich erhöhen, was die Genauigkeit der Positionsermittlung erhöht. Denn bei der Positionsermittlung mittels der Signallaufzeit ist es von entscheidender Bedeutung, dass die Sendeeinheiten ihr Positionssignal derart synchron aussenden, dass die Empfangseinheiten die Signallaufzeit möglichst genau bestimmen können.

Um die Ausfallsicherheit bzw. die Gewährleistung der Funktionsweise des Flugführungssystems sicher zu stellen, ist es ganz besonders vorteilhaft, wenn das Flugführungssystem derart eingerichtet ist, dass es die Funktionsweise einer der ortsfesten Sendeeinheiten- und/oder einer der objektfesten Empfangseinheiten verifizieren kann. Dazu sind die objektfesten Empfangseinheiten derart eingerichtet, dass sie die Positionssignale, die von den objektfesten Sendeeinheiten ausgesendet werden, ebenfalls empfangen und somit in Abhängigkeit von diesen empfangenen Positionssignalen die Funktionsweise der einzelnen Sender verifizieren können. So ist es beispielsweise denkbar, dass die Positionsermittlungseinheit, die mit den ortsfesten Empfangseinheiten in Verbindung steht, anhand dieser von den ortsfesten Sendeeinheiten ausgesendeten Positionssignale die Position der jeweiligen Bodenstation ermittelt und anhand dieser so ermittelten Ortsposition der Bodenstation die Funktionsweise des Flugführungssystems verifiziert, beispielsweise in dem die ermittelte Ortsposition mit der bekannten hochgenauen Ortsposition verglichen wird. Somit lassen sich die Fehlfunktionen aber auch entsprechende Störsender mit einem kriminellen Hintergrund frühzeitig sicher erkennen. Eine solche Überprüfung kann aber auch mit den an dem Flugobjekt angeordneten Empfangseinheiten durchgeführt werden.

Denkbar und besonders vorteilhaft ist es aber auch, wenn die Funktionsweise des Flugführungssystems derart verifiziert wird, dass sowohl die von dem Flugobjekt als auch die von dem Flughafen ermittelten Ortspositionen verglichen werden. Entstehen hierbei größere Abweichungen, so kann daraus abgeleitet werden, dass eine Fehlfunktion des Systems vorliegt, auf die schnellstmöglich reagiert werden muss.

Ganz besonders vorteilhaft ist es, wenn die Sendeeinheiten zum Codieren von Information in die Positionssignale und die Empfangseinheiten zum Extrahieren dieser Positionssignale eingerichtet sind. So lassen sich Informationen von den Bodenstationen zu dem Flugobjekt übertragen, ohne dass hierfür zusätzliche Funksysteme belegt werden müssen. So lassen sich bspw. die ermittelten Ortspositionen übertragen, so dass ein Vergleich, wie oben beschrieben, durchgeführt werden kann. Es lassen sich aber auch andere Informationen wie bspw. Daten über den Flughafen selbst mit Ortspositionen der ortsfesten Bodenstationen und über den Anflugweg (gerade oder "curved") bzw. topographische Daten im Umfeld des Flughafens übertragen.

Die Aufgabe der vorliegenden Erfindung wird auch mit einem Verfahren nach Anspruch 4 gelöst,

Vorteilhafte Ausgestaltungen des erfindungsgemäßen Verfahrens und der erfindungsgemäßen Vorrichtung sind Gegenstand der Unteransprüche.

Die Erfindung wird anhand der beigefügten Zeichnungen beispielhaft näher erläutert.

Es zeigen:
- Fig. 1: schematische Darstellung eines Flugführungssystems an einem Flughafen;
- Fig. 2: Sende- und Empfangsantennen zur Position- und Lagebestimmung eines Flugobjektes.

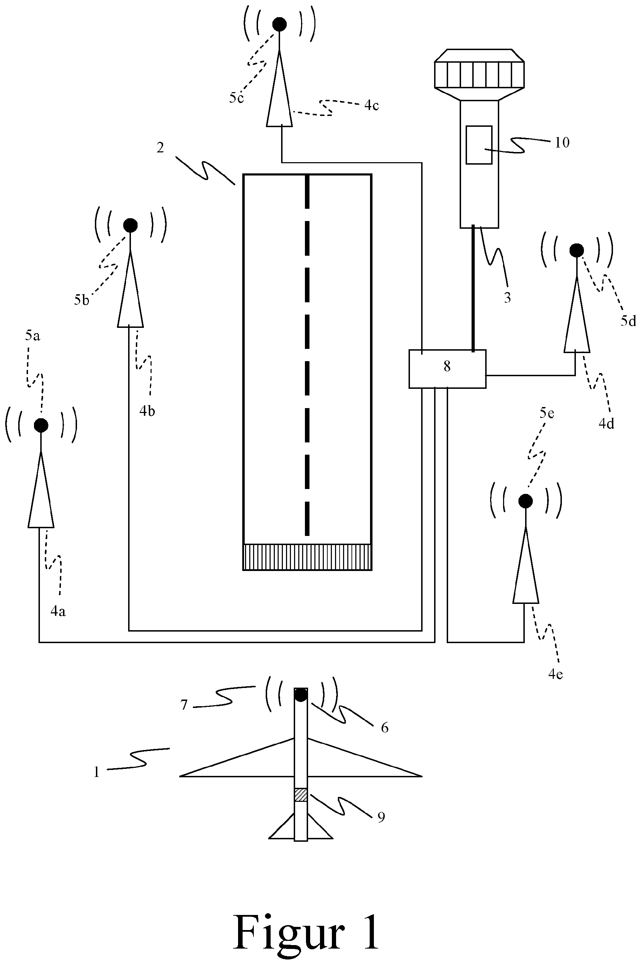

Figur 1 zeigt das erfindungsgemäße Flugführungssystem schematisch im Zusammenhang mit einem Flughafen. Das entsprechende Flugobjekt 1 befindet sich dabei gerade im Landeanflug auf die Landebahn 2. Die Reichweite des erfindungsgemäßen Flugführungssystems ist dabei auf ca. 20 bis 30 Meilen Radius um den Flughafen begrenzt, so dass jenseits dieses Radius die Navigation durch aus dem Stand der Technik bekannten Systemen erfolgt.

In der Nähe der Landebahn 2 befindet sich das Kontrollzentrum 3, auch Tower genannt, des Flughafens, das für die sichere Koordinierung der Anflüge bis zur Landung verantwortlich ist. Des Weiteren sind in der Umgebung des Flughafens und der Landebahn 2 eine Reihe von Bodenstationen 4a bis 4e angeordnet, die jeweils mit entsprechenden Sendeeinheiten 5a bis 5e ausgestattet sind. Da die Bodenstationen 4a bis 4e unveränderlich und ortsfest sind, liegt deren Ortsposition als feste Referenzgröße hochgenau vor.

An dem Flugzeug 1, das auf der Landebahn 2 des Flughafens landen möchten, sind des Weiteren Empfangseinheiten 6 angeordnet, die als die objektfesten Empfangseinheiten 6 bezeichnet werden. Sowohl die ortsfesten Sendeeinheiten 5a bis 5e als auch die objektfesten Empfangseinheiten 6 sind dabei derart eingerichtet, dass sie entsprechende Positionssignale 7 mit Hilfe der Sendeeinheiten aussenden können. Dafür sind die ortsfesten Sende- einheiten 5a bis 5e mit einer Kontrollstation 8 verbunden, um die entsprechenden Positionssignale 7 synchron aussenden zu können, was die Verwendung von extrem hochgenauen Referenzzeitgebern nicht mehr erforderlich macht. Im vorliegenden Beispiel sind dabei fünf Bodenstationen 4a bis 4e vorgesehen, wobei aus mathematischer Sicht jeweils nur vier Bodenstationen notwendig wären, um die Position hochgenau zu bestimmen.

An dem Flugzeug 1 ist des Weiteren eine Positionsermittlungseinheit 9 angeordnet, die mit den objektfesten Empfangseinheiten 6 verbunden ist. Werden nun von der Empfangseinheit 6 die von den ortsfesten Sende- und/oder Empfangseinheiten 5a bis 5e ausgesendeten Positionssignale 7 empfangen, so kann die Positionsermittlungseinheit 9 anhand der Signallaufzeit der einzelnen Signale die Entfernung zu den einzelnen Bodenstationen bestimmen, woraus sich unter Verwendung der hochgenauen Position der einzelnen Bodenstationen, die bekannt ist, die exakte Position des Flugobjektes 1 aus deren Schnittpunkten ermitteln lässt.

Grundsätzlich ist dieser Weg auch anders herum denkbar, so dass eine objektfeste Sendeeinheit 6 derart eingerichtet ist, dass von dem Flugobjekt 1 ein Positionssignal ausgesendet wird, was von den ortsfesten Empfangseinheiten 5a bis 5e empfangbar ist. Da die Bodenstationen 4a bis 4e voneinander beabstandet angeordnet sind, empfangen die jeweiligen Empfangseinheiten 5a bis 5e das von der objektfesten Sendeeinheit 6 ausgesendete Positionssignale zu unterschiedlichen Zeitpunkten. Somit kann jede Empfangseinheit 5a bis 5e eigenständig die Signallaufzeit des ausgesendeten Positionssignals 7 ermitteln und unter Zugrundelegung der eigenen hochgenauen Positionen lässt sich dann die Position des Flugobjektes 1 beispielsweise durch eine im Tower angeordnete Positionsermittlungseinheit 10 ermitteln. Diese Positionsermittlungseinheit 10 ist dabei mit den Empfangseinheiten 5a bis 5e der Bodenstationen 4a bis 4e verbunden.

Ermitteln sowohl das Flugobjekt 1 als auch der Tower 3 gleichzeitig die Position des Flugobjektes 1, so es höchst vorteilhaft, wenn das Flugführungssystem zum Abgleich dieser beiden voneinander unabhängig ermittelten Ortspositionen eingerichtet ist. Aus diesem Vergleich lässt sich dann ableiten, inwieweit das Flugführungssystem bei seiner Positionsbestimmung des Flugobjektes 1 hochgenau arbeitet, so dass die Funktionsweise des Flugführungssystems verifiziert werden kann. Hierfür können Kommunikationsmittel verwendet werden, damit Flugzeug und Tower die ermittelten Ortspositionen untereinander austauschen können.

Der Vorteil eines solchen Systems liegt dabei insbesondere darin, dass es wesentlich störunanfälliger ist als beispielsweise Satellitennavigationssysteme. Darüber hinaus kann der Verantwortungsbereich klar definiert werden, da mit einem solchen System nunmehr der Betreiber des Flughafens für die Sicherheit verantwortlich ist. Rechtliche Grauzonen, wie beispielsweise beim GPS, werden somit vermieden.

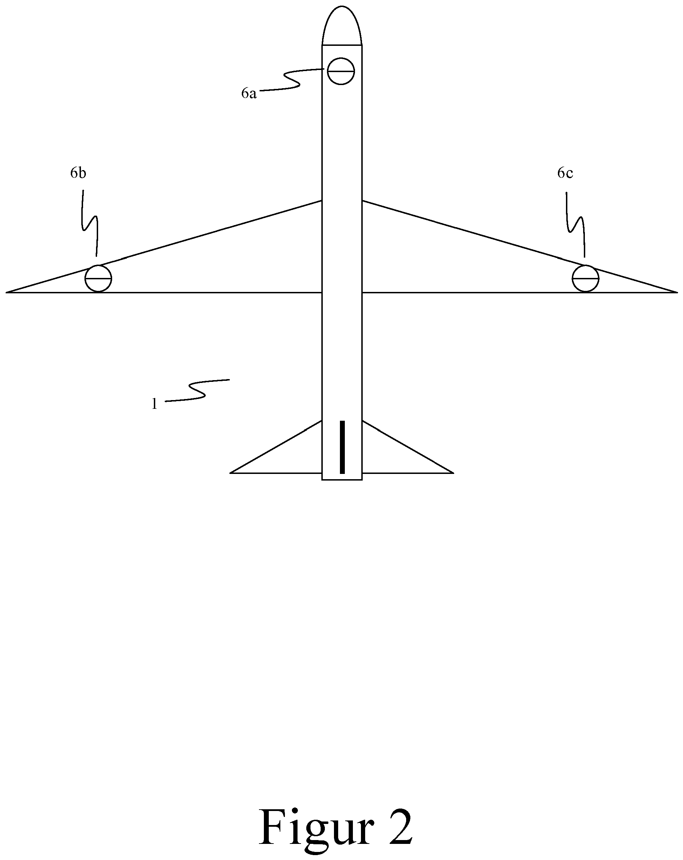

Figur 2 zeigt ein Luftfahrzeug 1, das insgesamt drei Empfangseinheiten 6a bis 6c an unterschiedlichen Positionen an dem Flugzeug 1 aufweist. Durch diese beabstandete Anordnung der Empfangseinheiten 6a bis 6c und deren ebenfalls bekannte relative Lage untereinander kann die Lage des Luftfahrzeuges 1 im Raum ermittelt werden, wenn für jede Empfangseinheit 6a bis 6c die aktuelle ortsgenaue Position innerhalb des Raumes ermittelt wird. Durch Verbinden dieser Positionen zu einer entsprechenden Ebene lässt sich dann die Lage des Fahrzeuges 1 im Raum ermitteln. Die Raumlage eines Flugzeuges mit den Komponenten Längsneigung, Rollwinkel und Azimut sind dabei bei der Landung ebenso mit zu berücksichtigen, so dass hier das Flugführungssystem zu dem bereits vorhandenen Lagewinkelsystem unterstützend wirken kann.

Vorteilhafterweise senden die Sendeeinheiten auf einer Trägerfrequenz, die von denen der Satellitennavigationssysteme verschieden ist, so dass diese Systeme nicht gestört werden und auch weiterhin unterstützend oder für Notfälle verwendet werden können.

## Patentansprüche

1. Flugführungssystem zur Flugunterstützung eines Flugobjektes (1) mit
- mindestens drei Bodenstationen (4a bis 4e), die jeweils eine ortsfeste Sendeeinheit (5a bis 5e) aufweisen, und
- mindestens einer an dem Flugobjekt angeordneten objektfesten Empfangseinheit (6, 6a bis 6c),
- wobei die ortsfesten Sendeeinheiten (5a bis 5e) zum Senden von Positionssignalen (7) und die mindestens eine objektfeste Empfangseinheit (6, 6a bis 6c) zum Empfangen dieser Positionssignale (7) eingerichtet sind,
- wobei das Flugführungssystem wenigstens eine mit den ortsfesten Sendeeinheiten (5a bis 5e) und der mindestens einer objektfesten Empfangseinheit (6, 6a bis 6c) in Verbindung stehende Positionsermittlungseinheit (9, 10) aufweist, die zum Ermitteln von Ortspositionen der mindestens einen objektfesten Empfangseinheit (6, 6a bis 6c) in Abhängigkeit von den Positionssignalen (7), die von den ortsfesten Sendeeinheiten (5a bis 5e) gesendet und von der mindestens einen objektfesten Empfangseinheit (6, 6a bis 6c) empfangen wurden eingerichtet ist,
- wobei die Positionsermittlungseinheit (9, 10) zum Ermitteln der Ortsposition der objektfesten Empfangseinheit (6, 6a bis 6c) in Abhängigkeit von einer Signallaufzeit der Positionssignale (7) zwischen den ortsfesten Sendeeinheiten (5a bis 5e) und der mindestens einen objektfesten Empfangseinheit (6, 6a bis 6c) eingerichtet ist und
- wobei das Flugführungssystem zur Flugunterstützung des Flugobjektes (1) in Abhängigkeit von der ermittelten Ortsposition der mindestens einen objektfesten Empfangseinheit (6, 6a bis 6c) ausgebildet ist,
**dadurch gekennzeichnet, dass**
- das Flugführungssystem drei an dem Flugobjekt (1) angeordnete objektfeste Empfangseinheiten (6, 6a bis 6c) aufweist, die voneinander beabstandet angeordnet sind,
- wobei die Positionsermittlungseinheit (9) zum Ermitteln der hochgenauen Ortspositionen der objektfesten Empfangseinheiten (6, 6a bis 6c) aus der Kombination von Entfernungs-, Winkel- und Dopplermessung in Abhängigkeit von den Positionssignalen (7) ausgebildet und damit zum Ermitteln der Raumlage des Flugobjektes (1) in Abhängigkeit von den Ortspositionen der objektfesten Empfangseinheiten (6a bis 6c) und der relativen Lage der objektfesten Empfangseinheiten (6a bis 6c) untereinander eingerichtet ist und
- wobei das Flugführungssystem zur Flugunterstützung des Flugobjektes in Abhängigkeit von der Raumlage des Flugobjektes (1) ausgebildet ist.

2. Flugführungssystem nach Anspruch 1, **dadurch gekennzeichnet, dass** die ortsfesten Sendeeinheiten (5a bis 5e) mit einer Steuereinheit (8) verbunden sind, die zum synchronen Aussenden der Positionssignale (7) mittels der verbundenen ortsfesten Sendeeinheiten (5a bis 5e) eingerichtet ist.

3. Flugführungssystem nach Anspruch 1 oder 2, **dadurch gekennzeichnet, dass** die ortsfesten Sendeeinheiten (5a bis 5e) zum Codieren von Informationen in den Positionssignalen und zum Aussenden solcher Positionssignale eingerichtet sind und die objektfesten Empfangseinheiten (6, 6a bis 6c) zum Empfangen solcher Positionssignale und zum Extrahieren der in den Positionssignalen enthaltenen codierten Informationen eingerichtet sind.

4. Verfahren zur Flugunterstützung eines Flugobjektes mit den Schritten:
- Aussenden von Positionssignalen mittels mindestens drei am Boden angeordneter ortsfester Sendeeinheiten (5a bis 5e) und Empfangen der Positionssignale mittels zumindest einer an dem Flugobjekt angeordneten objektfesten Empfangseinheit (6, 6a bis 6c),
- Ermitteln einer Ortsposition der mindestens einen objektfesten Empfangseinheit (6, 6a bis 6c) in Abhängigkeit von den empfangenen Positionssignalen, wobei die Ortsposition der objektfesten Empfangseinheit (6, 6a bis 6c) in Abhängigkeit von der Signallaufzeit der Positionssignale ermittelt wird, und
- Flugunterstützung des Flugobjektes in Abhängigkeit von der ermittelten Ortsposition,
**gekennzeichnet durch**
- Ermitteln der hochgenauen Ortspositionen dreier voneinander beabstandet an dem Flugobjekt angeordneter objektfester Empfangseinheiten (6, 6a bis 6c) aus der Kombination von Entfernungs-, Winkel- und Dopplermessung in Abhängigkeit von den empfangenen Positionssignalen,
- Ermitteln der Raumlage des Flugobjektes in Abhängigkeit von den Ortspositionen der drei an dem Flugobjekt angeordneten objektfesten Empfangseinheiten (6, 6a bis 6c) und deren relativen Lagen untereinander und
- Flugunterstützung des Flugobjektes in Abhängigkeit von der Raumlage des Flugobjektes.

5. Verfahren nach Anspruch 4, **gekennzeichnet durch** Codieren von Informationen in die Positionssignale und Aussenden solcher Positionssignale mittels der ortsfesten Sendeeinheiten (5a bis 5e) und Empfangen solcher Positionssignale mittels der objektfesten Empfangseinheiten (6, 6a bis 6c) und Extrahieren der codierten Informationen aus den Positionssignalen.

## Claims

1. A flight guidance system for flight support of a flying object (1) comprising
- at least three ground station (4a to 4e), each comprising a stationary transmission unit (5a to 5e), and
- at least one object-fixed receiving unit (6, 6a to 6c) arranged on the flying object,
- wherein the stationary transmission units (5a to 5e) are configured to transmit position signals (7) and the at least one object-fixed receiving unit (6, 6a to 6c) is configured to receive these position signals (7),
- wherein the flight guidance system comprises at least one position determination unit (9, 10) in communication with the stationary transmission units (5a to 5e) and the at least one object-fixed receiving unit (6, 6a to 6c), which position determination unit is configured to determine positions of the at least one object-fixed receiving unit (6, 6a to 6c) depending on the position signals (7) transmitted by the stationary transmission units (5a to 5e) and received by the at least one object-fixed receiving unit (6, 6a to 6c),
- wherein the position determination unit (9, 10) is configured to determine the position of the object-fixed receiving unit (6, 6a to 6c) depending on a signal propagation time of the position signals (7) between the stationary transmission units (5a to 5e) and the at least one object-fixed receiving unit (6, 6a to 6c), and
- wherein the flight guidance system for flight support of the flying object (1) is formed in dependence on the determined position of the at least one object-fixed receiving unit (6, 6a to 6c),
**characterized in that**
- the flight guidance system comprises three object-fixed receiving units (6, 6a to 6b) arranged on the flying object (1) and spaced apart from each other,
- wherein the position determination unit (9, 10) is configured to determine high-precision positions of the object-fixed receiving units (6, 6a to 6b) from the combination of distance measurement, angle measurement and Doppler measurement depending on the position signals (7) and thus to determine the spatial position of the flying object (1) depending on the positions of the object-fixed receiving units (6, 6a to 6b) and the relative position of the object-fixed receiving units (6, 6a to 6b) with respect to each other, and
- wherein the flight guidance system for flight support of the flying object is configured in dependence on the spatial position of the flying object (1).

2. The flight guidance system according to claim 1, **characterized in that** the object-fixed receiving units (6, 6a to 6b) are connected to a control unit (8) configured to synchronously emit the position signals (7) by means of the connected stationary transmission units (5a to 5e).

3. The flight guidance system according to claim 1 or 2, **characterized in that** the stationary transmission units (5a to 5e) are configured to encode information into the position signals and to transmit such position signals, and the object-fixed receiving units (6, 6a to 6b) are configured to receive such position signals and to extract the encoded information contained in the position signals.

4. A method for flight support of a flying object comprising the steps of:
- transmitting position signals by means of at least three stationary transmission units (5a to 5e) arranged on the ground and receiving the position signals by means of at least one object-fixed receiving unit (6, 6a to 6c) arranged on the flying object,
- determining a position of the of the at least one object-fixed receiving unit (6, 6a to 6c) depending on the received position signals, wherein the position of the object-fixed receiving unit (6, 6a to 6c) is determined depending on the signal propagation time of the position signals, and
- providing flight support for the flying object in dependence on the determined position,
**characterized by**
- determining the high-precision positions of three object-fixed receiving units (6, 6a to 6b) arranged spaced apart from each other on the flying object from the combination of distance measurement, angle measurement and Doppler measurement depending on the received position signals,
- determining the spatial position of the flying object depending on the positions of the three object-fixed receiving units (6, 6a to 6b) arranged on the flying object and their relative positions with respect to each other, and
- providing fight support for the flying object is configured in dependence on the spatial position of the flying object.

5. The method according to claim 4, **characterized by** encoding information into the position signals and transmitting such position signals by means of the stationary transmission units (5a to 5e) and receiving such position signals by means of the object-fixed receiving units (6, 6a to 6b) and extracting the encoded information from the position signals.

## Revendications

1. Système de guidage de vol pour l'assistance au vol d'un objet volant (1) comprenant
- au moins trois stations terrestres (4a à 4e), chacune comprenant une unité d'émission (5a à 5e) stationnaire, et
- au moins une unité de réception (6, 6a à 6c) fixée sur l'objet volant (1),
- les unités d'émission (5a à 5e) stationnaires étant conçus pour émettre des signaux de position (7) et ladite au moins une unité de réception (6, 6a à 6c) fixée sur l'objet volant étant conçue pour recevoir ces signaux de position (7),
- le système de guidage de vol comprenant au moins une unité de détermination de position (9, 10) en communication avec les unités d'émission (5a à 5e) stationnaires et ladite au moins une unité de réception (6, 6a à 6c) fixée sur l'objet volant, ladite unité de détermination de position étant conçue pour déterminer des positions de ladite au moins une unité de réception (6, 6a à 6c) fixée sur l'objet volant en fonction des signaux de position (7) émises par les unités d'émission (5a à 5e) stationnaires et reçues par ladite au moins une unité de réception (6, 6a à 6c) fixée sur l'objet volant,
- ladite unité de détermination de position (9, 10) étant conçue pour déterminer la position de ladite unité de réception (6, 6a à 6c) fixée sur l'objet volant en fonction du temps de propagation des signaux de position (7) entre les unités d'émission (5a à 5e) stationnaires et ladite au moins une unité de réception (6, 6a à 6c) fixée sur l'objet volant, et
- le système de guidage de vol pour l'assistance au vol de l'objet volant (1) étant conçu en fonction de la position déterminée de ladite au moins une unité de réception (6, 6a à 6c) fixée sur l'objet volant,
**caractérisé en ce que**
- le système de guidage de vol comprend trois unités de réception (6, 6a à 6c) fixées sur l'objet volant disposées écartées l'une de l'autre,
- ladite unité de détermination de position (9, 10) étant conçue pour déterminer les positions à haute précision des unités de réception (6, 6a à 6c) fixées sur l'objet volant de la combination des mesures de distance, d'angle et par Doppler en fonction des signaux de position, et étant ainsi conçue pour déterminer la position spatiale de l'objet volant (1) en fonction des positions des unités de réception (6, 6a à 6c) fixées sur l'objet volant et de la position relative des unités de réception (6, 6a à 6c) fixées sur l'objet volant entre elles, et
- ledit système de guidage de vol pour l'assistance au vol de l'objet volant étant conçu en fonction de la position spatiale de l'objet volant (1).

2. Système de guidage de vol selon la revendication 1, **caractérisé en ce que** les unités d'émission (5a à 5e) stationnaires sont reliées à une unité de commande (8) conçue pour l'émission synchrone des signaux de position (7) au moyen des unités d'émission (5a à 5e) stationnaires.

3. Système de guidage de vol selon la revendication 1 ou 2, **caractérisé en ce que** les unités d'émission (5a à 5e) stationnaires sont conçues pour encoder des informations dans les signaux de position et pour émettre tels signaux de position, et les des unités de réception (6, 6a à 6c) fixées sur l'objet volant sont conçues pour recevoir tels signaux de position et pour extraire les informations encodés contenus dans les signaux de position.

4. Procédé pour l'assistance au vol de l'objet volant, le procédé comportant les étapes suivantes:
- émission de signaux de position au moyen d'au moins trois unités d'émission (5a à 5e) stationnaires disposées sur terre et réception des signaux de position au moyen d'au moins une unité de réception (6, 6a à 6c) fixées sur l'objet volant,
- détermination d'une position de ladite au moins une unité de réception (6, 6a à 6c) fixées sur l'objet volant en fonction des signaux de position reçus, la position de ladite unité de réception (6, 6a à 6c) fixées sur l'objet volant étant déterminée du temps de propagation des signaux de propagation, et
- assistance au vol de l'objet volant en fonction de la position déterminée,
**caractérisé par**
- la détermination desdites positions à haute précision de trois unités de réception (6, 6a à 6c) fixées espacées l'une de l'autre sur l'objet volant de la combination des mesures de distance, d'angle et par Doppler en fonction des signaux de position,
- la détermination de la position spatiale de l'objet volant en fonction des positions des trois unités de réception (6, 6a à 6c) fixées sur l'objet volant et de leurs positions relatives entre elles, et
- l'assistance au vol de l'objet volant en fonction de la position spatiale de l'objet volant.

5. Procédé selon la revendication 4, **caractérisé par** l'encodage d'informations dans les signaux de position et l'émission de tels signaux de position au moyen des unités d'émission (5a à 5e) stationnaires et la réception de tels signaux de position au moyen des unités de réception (6, 6a à 6c) fixées sur l'objet volant et l'extraction des information encodés des signaux de position.
